# EUROPEAN PATENT APPLICATION

(11) **EP 2 065 331 A2**
(43) Date of publication of application: **03.06.2009**
(21) Application number: 08170354.8
(22) Date of filing: 01.12.2008
(51) Int. Cl.: B66C 13/22, B66C 13/28, B66D 1/40

(54) **A method and apparatus for operating a crane and improvements in or relating to electricity generation**

(30) Priority: 01.12.2007 GB 0723558
(71) Applicant: Airmax Group Plc, Verwood, Dorset, BH31 6BE (GB)
(72) Inventor: Duddle, Ashley Robert, Fareham,Hampshire, PO 14 1NN (GB); Perham, Stephen Henry, Walton-on-Thames,Surrey,KT12 3QD (GB)
(74) Representative: Lawrence, John

(57) **Abstract**

A method of operating a crane (10), comprises operating an internal combustion engine (24) of a crane at an optimum performance;
maintaining a charge in a battery (26) of the crane using the engine (24) which is operating at said optimum performance; and
using the battery (26) to power an electric motor (22) of the crane to move a load (20).

## Description

The invention relates to improvements in or relating to electricity generation and in particular, although not exclusively, to a method and apparatus for operating a crane.

It is known from JP2003246586 to provide a crane having a wind turbine, a solar panel, a battery, an electric motor and a diesel engine. The battery is charged at night using the wind turbine, and in the day by the solar panel and the wind turbine. Such a crane is used for lifting and moving a load using the electric motor until the battery is flat. When the battery is flat the diesel engine is used to lift the load. The diesel engine is required to be a large unit so that it is not underpowered in the event that the battery is flat and the electric motor cannot be used to lift a particular load.

A problem associated with such a crane is that it may not be optimised for energy efficiency or to minimise carbon emissions. When the crane has been operated for a period of time the battery becomes flat which necessitates use of the diesel engine in place of the electric motor to lift the load. The diesel engine is typically very large which is overpowered for lifting an average load. Such an overpowered diesel engine means that the crane may be overpowered for the majority of the lifting tasks that it is required to undertake, which may be wasteful of energy.

A further problem that is associated with prior art cranes is that very often they may be overpowered for a particular task, such as building a skyscraper. A crane hire company may be requested to send a crane to a building site to build the skyscraper. The cost to the hire company of sending an underpowered crane to the building site is very large because the underpowered crane must be taken away and a more powerful crane must be sent. Furthermore compensation may be payable by the hire company if the building work cannot continue due to the delivery of an underpowered crane. These factors drive crane hire companies to deliver an overpowered crane to the building site in the first instance. In some cases the crane may be overpowered by 100% which increases the overall running cost for the hire company.

What is required is an improved way of generating electricity, and possibly also operating a crane. What is also required is a way of more accurately predicting the crane power required for a particular task so that future requirements can be planned.

According to a first aspect of the invention, there is provided a method of operating a crane, the method comprising:
operating an internal combustion engine of a crane at an optimum performance;
maintaining a charge in a battery of the crane using the engine which is operating at said optimum performance; and
using the battery to power an electric motor of the crane to move a load.

Operating a crane in such a manner has the advantage that the engine provides a charge to the battery to maintain it in an optimal state for performing work to move a load using the electric motor. This may or may not require the engine to be operated continuously to charge the battery. The crane represents an advance in hybrid engine and electric motor units for the crane because running the engine at an optimal engine speed is an efficiency improvement. This improvement also permits the crane to operate without the battery running flat. The crane has the advantage that a smaller engine can be used on the crane to charge the battery in place of a very large diesel engine which may be used to lift a load and charge the battery of the prior art. Such a method may also have the advantage that the average noise and amount of fumes produced is reduced when compared to a crane having an engine which is operated continuously.

Preferably operating the engine of the crane at an optimum performance includes operating the engine at an optimal engine speed for producing the lowest emissions per unit of energy output by the engine.

Preferably the lowest emissions could be any of:
lowest CO₂;
lowest NO;
lowest particulate emissions; and
a balance between any of the above.

The method may further include using the electric motor and an engine operating at the same time for moving the load.

The method may further include using a power inverter to spread peak to mean power levels when the crane is in operation depending on whether the electric motor alone, or electric motor and engine together, are used to move the load.

The method may include maintaining the charge in the battery using one or more of a solar cell array, a wind turbine and the engine.

The method may include operating the crane using a controller arranged to monitor the performance of the crane. The method may include producing a use profile of how the crane is used, and preferably the method includes using the controller to monitor at least one of the battery, the electric motor, the engine, the electricity generator, the wind turbine and the solar cell array preferably via a system bus, although a wireless monitoring system is also envisaged.

The method may include generating the use profile for the crane or a particular customer or for a particular task.

The method may include monitoring the battery and using at least one of the diesel engine, the solar cell array, and the wind turbine to maintain the charge in the battery.

In one embodiment the method includes using a load to generate electricity via the electric motor or a generator when the load is lowered. Such a regenerative capability may further improve the running efficiency of the crane. The method may include storing the recovered electricity in the battery.

According to a second aspect of the invention, there is provided a crane comprising an internal combustion engine, an electric motor and a battery, the engine operable to charge the battery, the battery operable to power the electric motor to move a load wherein the engine is operable at an optimum performance.

Preferably the engine of a crane is arranged to be operated at an optimal engine speed for producing the lowest emissions per unit of energy output by the engine.

Preferably the lowest emissions could be any of:
lowest CO₂;
lowest NO;
lowest particulate emissions; and
a balance between any of the above.

The crane may further be arranged to move the load with the electric motor and an engine operating at the same time.

The crane may have a power inverter arranged to spread peak to mean power levels when the crane is in operation with the electric motor alone, or electric motor and diesel engine together, to move the load.

The battery may be arranged to be charged by one or more of a solar cell array, a wind turbine and the engine.

Preferably the crane has a controller for monitoring the performance of the crane. The controller may be arranged to produce a use profile of how the crane is used and preferably the controller is arranged to monitor at least one of the battery, the electric motor, the diesel engine, the electricity generator, the wind turbine and the solar cell array preferably via a system bus. The use profile may be produced for the crane or a particular customer.

Preferably the controller is arranged to monitor the battery and uses one or more of the diesel engine, the solar cell array, and the wind turbine to maintain the charge in the battery.

In one embodiment the crane is arranged to generate electricity via the electric motor or the generator when the load is lowered. The electricity may be stored in the battery.

According to a third aspect there is provided a method of operating a crane, the method comprising:
monitoring the performance of the crane;
producing a use profile of how the crane is used; and
using the use profile to predict a future requirement for the crane.

Such a method allows a more accurate prediction of how a crane might be used in the future which might be useful, for example, to a crane hire company in determining the correct crane for a particular task, for example at a building site. This may avoid an overpowered crane being delivered for a particular task, such as building a skyscraper which may save operating costs for the hire company.

The method may include selecting a crane from a plurality of available cranes, using the use profile to select the crane, possibly selecting the crane that most closely matches the use profile, subject to the crane that is selected meeting minimum requirements (e.g. at least as powerful as 90% of the highest power levels needed).

The method may include generating the use profile for a particular customer or for a particular task.

Preferably the method includes using the controller to monitor at least one of a battery, an electric motor, an engine, an electricity generator, a wind turbine and a solar cell array of the crane preferably via a system bus.

According to a fourth aspect of the invention there is provided a method of generating electricity, the method comprising:
operating an internal combustion engine at an optimum performance;
maintaining an electric charge in a battery using an electricity generator coupled to the engine which is operating at said optimum performance; and
supplying electricity using the battery.

Generating electricity in such a manner has the advantage that the engine provides a charge to the battery to maintain it in an optimal state for supplying electricity when required. This may or may not require the engine to be operated continuously to charge the battery. Such a method of generating electricity is an efficiency improvement, and is useful for providing a stand alone electricity supply. Such a method may be useful on a building site, at road works, or at any remotely located site that requires an independent electricity supply. The method may also have the advantage that the average noise and amount of fumes produced is reduced when compared to a known generator having an engine which is operated continuously.

Preferably operating the engine at an optimum performance includes operating the engine at an optimal engine speed for producing the lowest emissions per unit of energy output by the engine.

Preferably the lowest emissions could be any of:
lowest CO₂;
lowest NO;
lowest particulate emissions; and
a balance between any of the above.

The method may further include using a power inverter to spread peak to mean power levels. This has the advantage that a relatively low power generator can be used to meet the average electricity load supplied via the battery, and the battery can be used to provide a peak electricity requirement. Such an inverter provides the advantage of being able to run the engine in a high efficiency mode to meet an average electricity requirement whilst still being able to meet peak demand requirements.

The method may include maintaining the charge in the battery using one or more of a solar cell array, a wind turbine and the engine.

The method may include using a controller arranged to monitor the performance of the battery and/or generator. The method may include producing a use profile of how the battery and/or generator is used, and preferably the method includes using the controller to monitor at least one of the battery, the engine, the electricity generator, the wind turbine and the solar cell array preferably via a system bus, although a wireless monitoring system is also envisaged.

The method may include generating the use profile for the battery and/or generator for a particular customer or for a particular task.

The method may include monitoring the battery and using at least one of the diesel engine, the solar cell array, and the wind turbine to maintain the charge in the battery.

According to a fifth aspect of the invention, there is provided an electricity generation device comprising an internal combustion engine, an electricity generator and a battery, the engine operable to drive the electricity generator to charge the battery, wherein the battery is arranged to supply electricity and the engine is arranged to be operable at an optimum performance.

Preferably the engine is arranged to be operated at an optimal engine speed for producing the lowest emissions per unit of energy output by the engine.

Preferably the lowest emissions could be any of:
lowest CO₂;
lowest NO;
lowest particulate emissions; and
a balance between any of the above.

The device may have a power inverter arranged to spread peak to mean power levels.

The battery may be arranged to be charged by one or more of a solar cell array, a wind turbine and the engine.

Preferably the device has a controller for monitoring the performance of the battery and/or generator. The controller may be arranged to produce a use profile of how the battery and/or generator is used and preferably the controller is arranged to monitor at least one of the battery, the diesel engine, the electricity generator, the wind turbine and the solar cell array preferably via a system bus.

Preferably the controller is arranged to monitor the battery and uses one or more of the diesel engine, the solar cell array, and the wind turbine to maintain the charge in the battery.

It will be appreciated that any of the optional features associated with an aspect of the invention, are also optional features associated with other aspects of the invention.

Embodiments of the invention will now be described in detail, by way of example only, and with reference to the accompanying drawings, of which: -
**Figure 1** shows a crane according to an embodiment of the present invention;
**Figure 2** shows graphically the steps performed when operating the crane of Figure 1 according to an embodiment of the present invention; and
Figure 3 shows an electricity generation device according to an embodiment of the present invention.

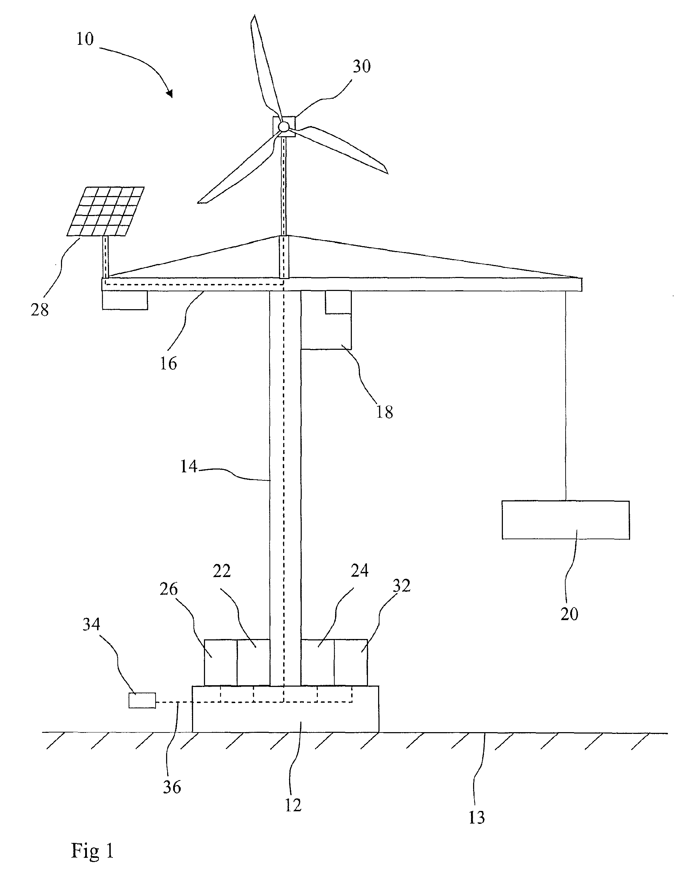

The present embodiment describes a method and apparatus for operating a crane. Figure 1 shows a crane according to an embodiment of the present invention, generally designated 10. The crane 10 has a base 12 which sits on ground 13. The base 12 has a tower 14 with a boom 16 on top of the tower 14. The crane 10 has a cabin 18 adjacent the tower 14 and the boom 16 for an operator of the crane 10.

In Figure 1 the crane 10 is shown carrying a load 20. The base 12 has an electric motor 22 and a diesel engine 24 which are operable at the same time or individually for moving the load 20. It will be appreciated that a power inverter may be needed to spread peak to mean power levels when the crane 10 is in operation and depending on whether the electric motor 22 or diesel engine 24 is used to power it. The base also has a battery 26 for powering the electric motor 22. The crane 10 has a solar cell array 28 for generating electricity, and a wind turbine 30 having an integral electricity generator to charge the battery 26. The diesel engine 24 is also provided with an electricity generator 32 for charging the battery 26.

The battery 26 of the crane 10 is charged using a combination of the solar cell array 28, the wind turbine 30 and the diesel engine 24. During nighttime the wind turbine 30 is used to charge the battery 26 if there is sufficient wind. During the daytime a combination of the wind turbine 30 and the solar cell array 28 are used to charge the battery 26. Furthermore, when the crane 10 is used for lifting the load 20, or about to be used for lifting the load 20, the diesel engine 24 and generator 32 are used to charge the battery 26.

In order to achieve low exhaust emissions, such as low carbon emissions, the diesel engine 24 is run at an optimal engine speed for producing the lowest emissions per unit of energy output by the engine. This may be an optimal engine speed for producing the lowest emissions relative to the maximum power output or optimum power output for charging the battery 26. The lowest emissions could be any of lowest CO₂, lowest NOX, lowest particulate emissions, and a balance between of these emissions. Operating the crane 10 in this manner requires a controller 34 as shown in Figure 1. The controller 34 monitors the battery 26, the electric motor 22, the diesel engine 24, the electricity generator 32, the wind turbine 30 and the solar cell array 28 via a system bus 36 shown in dotted lines. The controller 34 is arranged to monitor the performance of these items of the crane to produce a profile of how the crane is used. For example, the monitoring device 34 could measure the charge in the battery 26, the load of the electric motor 22, the power output and emissions of the diesel engine 24, the power output of the electricity generator 32, the power output of the wind turbine 30 and/or the power output of the solar cell array 28.

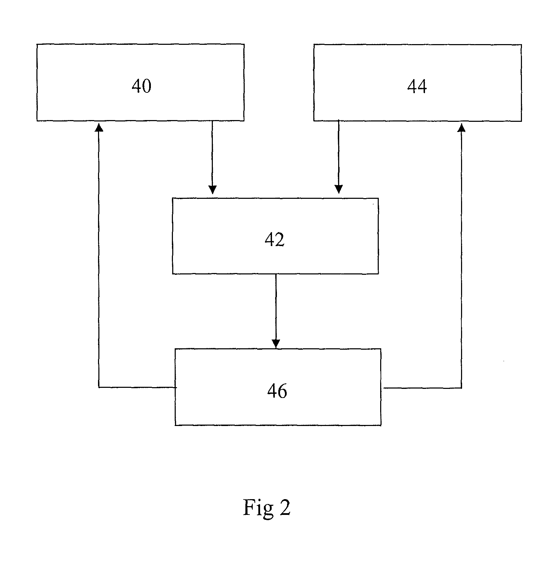

Monitoring such parameters allow a use profile to be generated for the crane 10 or a particular customer or a particular task which may be used to reduce the operating and maintenance cost of the crane 10. This may be a particularly advantageous feature if there are a fleet of cranes 10 that are being monitored. Furthermore, the profile of use would allow the correct crane 10 for a particular job to be determined so that in future the correct crane for a particular task is delivery to a building site. This would assist in determining that the crane is not underpowered or overpowered for the task to be performed. The operation of the controller 34 will be described further with reference to Figure 2.

Figure 2 shows graphically the steps performed when operating the crane of Figure 1 according to an embodiment of the present invention. Firstly the diesel engine 24 is started and set to run at an optimum engine speed for producing the lowest emissions per unit of energy output by the engine. This may be an optimal engine speed for producing the lowest emissions, such as carbon emissions, relative to the maximum power output or optimum power output for charging the battery 26. This step is shown at 40. Once the battery 26 is charged and ready to perform work the crane 10 is used to move a load 20 as shown at 42. In parallel to charging the battery 26 by the diesel engine 24 at step 40, the solar cell array 28 and/or the wind turbine 30 may be used to charge the battery 26. This step is shown at 44.

It will be appreciated that the controller 34 operates to charge the battery 26 using the diesel engine 24, the solar cell array 28 and/or the wind turbine 30 by monitoring these items and the crane 10 to ensure that the condition of the battery 26 is in an optimal state for moving the load 20. This monitoring and control step is shown at 46 which feeds back into the charging steps 40 and 44 which use the diesel engine 24 and/or the solar cell array 28 and/or the wind turbine 30 to maintain the charge in the battery 26. It will be appreciated that the diesel engine may not need to be running all of the time when electricity is being drawn from the battery.

The solar cell array 28, the wind turbine 30 and/or the diesel engine provide a charge to the battery 26 which may be a slow trickle to maintain it in an optimal state for performing work to move the load 20 using the electric motor 22. The crane 10 represents an advance in hybrid engine and electric motor units to provide power for the crane 10 because running the diesel engine 24 at an optimal engine speed, and only using is when necessary to charge the battery is an efficiency improvement. Since the diesel engine is not operated continuously for charging, the average noise levels and overall fumes may be lower than if the engine had been operated continuously. These improvements also permits the crane 10 to operate without the battery running flat. In order to achieve improved engine efficiency the diesel engine 24 is run at an optimal engine speed for producing the lowest emissions per unit of energy output by the engine. The crane 10 has the advantage that a smaller diesel engine 24 can be used on the crane in place of a very large diesel engine which may be used in the prior art.

The crane 10 has a regenerative load lowering capability to obtain electricity when a load is lowered via the electric motor 22. Such recovered energy in the form of electricity can be used to charge the battery 26 using the generator 32.

It will be appreciated that because the crane has a battery, there is no need to start the diesel engine/internal combustion engine to access electrical power. Lights, or boiling a kettle for making tea, can now be powered from the battery, avoiding the need to turn the engine on for such low power activities.

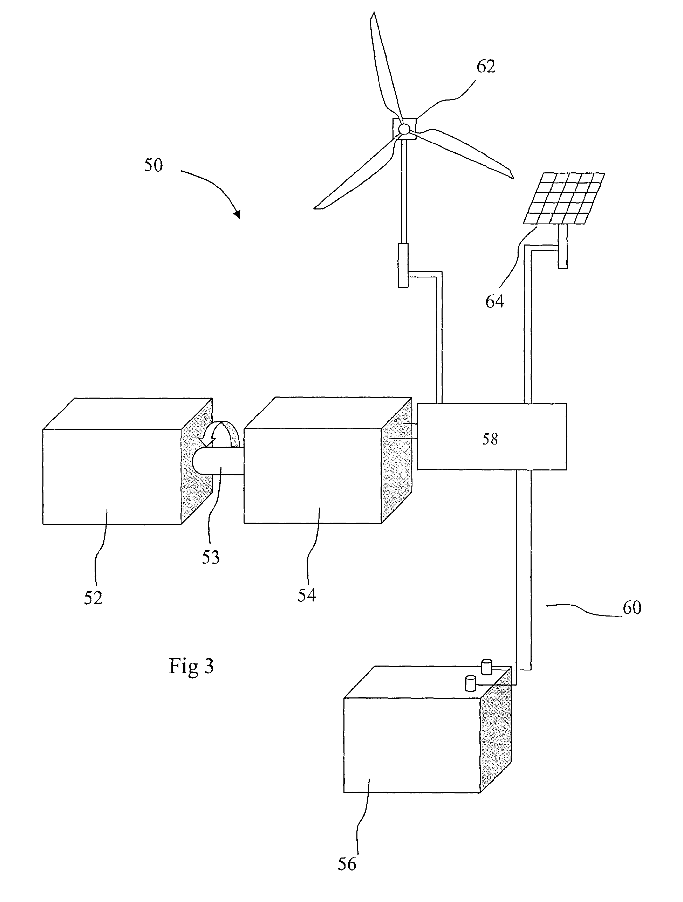

Whilst the above embodiment describes a crane, and a way of generating electricity to power the crane, it will be appreciated that the principles described can be applied to any stand alone, or moveable, electricity generator and a method of generating electricity. Such a stand alone electricity generator may be useful on a building site, or at road works, or at any remotely located site that requires an independent electricity supply. Figure 3 shows an electricity generation device according to an embodiment of the present invention, generally designated 50 which operates using the same principles as the engine, generator and battery arrangement of Figures 1 and 2.

In Figure 3 the electricity generation device 50 comprises a diesel engine 52 coupled to an electricity generator 54 by a shaft 53. A battery 56 is shown connected to the electricity generator 54 via a controller 58 and by leads 60. A wind turbine 62 and a solar cell array 64 are also shown connected to the controller 58. In operation the generator 54, the wind turbine 62 or the solar cell array 64 can be used to provide a trickle charge to the battery 56 under the command of the controller 58 to meet an average electricity demand from the battery 56. When the battery 56 is at a predetermined level of charge the engine 52 can be used to recharge it using the generator 54. When the battery 56 is charged by the engine 64 it is operated at an optimum performance as described above with reference to Figures 1 and 2 for reducing or balancing the engine emissions. The generation device 50 has the advantage that the engine 52 is not required to be operated continuously to charge the battery 56, and need only be used for charging the battery when the battery is below a predetermined level of charge.

It will also be appreciated that the invention applies not only to cranes and stand-alone generators, but also to electrical generators/internal combustion engine combinations that are integral with, or associated with, other powered equipment, such as (purely for example) fluid pumps, building-site machinery, and industrial machines.

It will further be appreciated that any of the features of any of the embodiments of the invention, may also be used with other embodiments of the invention.

## Claims

1. A method of operating a crane (10), the method comprising:
operating an internal combustion engine (24) of a crane at an optimum performance;
maintaining a charge in a battery (26) of the crane using the engine (24) which is operating at said optimum performance; and
using the battery (26) to power an electric motor (22) of the crane to move a load (20).

2. A method according to claim 1 and further including operating the engine at an optimal engine speed for producing the lowest emissions per unit of energy output by the engine, and optionally or preferably wherein the lowest emissions could be any of:
lowest CO₂;
lowest NO;
lowest particulate emissions; and
a balance between any of the above.

3. A method according to claim 1, or claim 2 and further including using the electric motor (22) and an engine (24) operating at the same time for moving the load.

4. A method according to any preceding claim and further including using a power inverter to spread peak to mean power levels when the crane is in operation depending on whether the electric motor alone, or electric motor and engine together, are used to move the load.

5. A method according to any preceding claim and further including maintaining the charge in the battery using one or more of a solar cell array, a wind turbine and the engine, and/or further including producing a use profile of how the crane is used.

6. A method according to claim 5 and further including selecting a crane from a plurality of available cranes, and using the use profile to select the crane, and optionally or preferably further including selecting the crane that most closely matches the use profile, subject to the crane that is selected meeting minimum requirements.

7. A method according to claim 5 or claim 6 and further including generating the use profile for the crane or a particular customer.

8. A method according to any preceding claim and further including monitoring the performance of the crane, and/or further including monitoring at least one of the battery, the electric motor, the engine, the electricity generator, the wind turbine and the solar cell array.

9. A method according to claim 8 and further including using a controller (34) to monitor the crane (10), and/or further including monitoring the crane via a system bus (36).

10. A method according at any preceding claim and further including using the load (20) to generate electricity via the electric motor (22) or a generator (32) when the load is lowered, and optionally or preferably further including storing the recovered electricity in the battery (26).

11. A crane (10) comprising an internal combustion engine (24), an electric motor (22) and a battery (26), the engine (24) operable to charge the battery, the battery operable to power the electric motor to move a load (20) wherein the engine is operable at an optimum performance.

12. A crane according to claim 11 wherein the engine (24) is arranged to be operated at an optimal engine speed for producing the lowest emissions per unit of energy output by the engine, and optionally or preferably wherein the lowest emissions could be any of:
lowest CO₂;
lowest NO;
lowest particulate emissions; and
a balance between any of the above.

13. A crane according to claim 11 or claim 12 and further including a power inverter arranged to spread peak to mean power levels when the crane is in operation with the electric motor alone, or electric motor and diesel engine together, to move the load.

14. A crane according to any of claims 11 to 13 wherein the battery (26) is arranged to be charged by one or more of a solar cell array (28), a wind turbine (30) and the engine (24), and/or including a controller (34) for monitoring the performance of the crane, and optionally or preferably wherein the controller is arranged to monitor at least one of the battery, the electric motor, the diesel engine, the electricity generator, the wind turbine and the solar cell array.

15. A crane according to claim 14 wherein (1) the controller (34) is arranged to produce a use profile of how the crane is used; or
(11) the controller (34) is arranged to monitor the battery and uses one or more of the diesel engine, the solar cell array, and the wind turbine to maintain the charge in the battery; or
(111) the crane is further arranged to generate electricity via the electric motor or a generator when the load is lowered, and optionally wherein the electricity is arranged to be stored in the battery.
